# FASCICULE DE BREVET EUROPEEN

(11) **EP 2 145 814 B1**
(45) Date de publication et mention de la délivrance du brevet: **22.06.2011**
(21) Numéro de dépôt: 09164601.8
(22) Date de dépôt: 03.07.2009
(51) Int. Cl.: G01B 7/315, B62D 17/00, B62D 5/04

(54) **Procédé pour le réglage du parallélisme du train avant des véhicules automobiles**
Verfahren zur Spureinstellung der Vorderradachse von Kraftfahrzeugen
Method for toe-in adjustment of the front axle of an automobile

(30) Priorité: 16.07.2008 FR 0804042
(43) Date de publication de la demande: 20.01.2010
(73) Titulaire: Jtekt Europe, 69540 Irigny (FR)
(72) Inventeur: Hérault, Sébastien, 69008, LYON (FR); Villez, Steeve, 69390, CHARLY (FR)
(74) Mandataire: Maureau, Philippe

(56) Documents cités:
- EP-A- 1 186 857
- EP-A1- 2 078 924
- WO-A-00/60309
- WO-A-2008/000229
- US-B1- 6 456 372

## Description

La présente invention concerne un procédé apportant une aide au réglage du parallélisme du train avant des véhicules automobiles, en particulier dans le cadre de la maintenance et de la réparation de ces véhicules.

Lors des opérations de réglage du parallélisme du train avant, c'est-à-dire des deux roues avant directrices d'un véhicule automobile, il est nécessaire de verrouiller le volant de conduite en position centrale, dite aussi position neutre. Ceci est communément réalisé en utilisant un outil ou accessoire qui maintient le volant en position, pendant que le réglage est effectué notamment en réglant les longueurs des biellettes de direction qui relient les extrémités de la crémaillère de la direction aux deux roues avant directrices. Ainsi, la procédure actuelle de réglage du parallélisme nécessite un élément mécanique, et elle demande aussi du temps et de la main d'oeuvre pour la mise en place et pour le retrait de cet élément mécanique. Le document EP 1186857 A2 prévoit déjà un appareil motorisé pour l'amenée et le maintien du volant en position centrale, mais cet appareil, extérieur au véhicule, doit être amené dans le véhicule et fixé à celui-ci, par exemple sous le siège du conducteur. D'une manière assez similaire, le document US 6456372 B1 prévoir un actionneur extérieur, du genre clé motorisée, agissant sur la colonne de direction, à une extrémité de celle-ci.

Or, les véhicules automobiles sont actuellement équipés, de plus en plus couramment, d'une direction assistée électrique, laquelle comprend en particulier un moteur électrique d'assistance piloté à partir d'un calculateur électronique, en fonction de divers paramètres ou signaux, le moteur électrique d'assistance pouvant aussi être asservi en position et en couple.

Partant de ce constat, la présente invention a pour but de fournir un procédé pour le réglage du parallélisme du train avant des véhicules automobiles, qui rend inutile l'élément mécanique ou l'appareil motorisé de blocage du volant en position centrale, en mettant à profit le système d'assistance électrique de la direction.

A cet effet, l'invention a pour objet un procédé apportant une aide au réglage du parallélisme du train avant des véhicules automobiles équipés d'une direction à assistance électrique, ce procédé consistant essentiellement, avant et pendant le réglage du parallélisme, à activer une fonction de blocage de la direction par un pilotage direct du moteur électrique d'assistance qui amène et/ou maintient la direction du véhicule dans sa position centrale.

Ainsi, le principe de l'invention consiste à utiliser le couple produit par le moteur électrique d'assistance, alors alimenté électiquement, pour bloquer la direction en position centrale pendant toute la procédure de réglage du parallélisme, ce qui rend inutile tout blocage mécanique ou électrique extérieur, donc tout outil ou accessoire ou appareil de maintien du volant et supprime aussi, bien entendu, toutes les opérations de mise en place et de retrait d'un tel outil ou accessoire ou appareil.

On notera que le procédé de l'invention met à profit de façon judicieuse non seulement le moteur électrique d'assistance, dont la puissance est disponible, mais aussi le mécanisme réducteur qui relie l'arbre du moteur électrique d'assistance à la colonne de direction et au pignon de direction, et qui fait ici office de multiplicateur de couple si bien qu'un couple amplifié est transmis à la direction pour la maintenir immobile, en position centrale.

Avantageusement, la fonction de blocage de la direction par pilotage du moteur électrique d'assistance est activée, en vue du réglage du parallélisme, sous la double condition qu'une requête d'activation soit faite, par une action extérieure, et que la vitesse du véhicule soit nulle. On obtient ainsi un haut degré de sécurité, en évitant notamment tout risque de blocage de la direction lorsque le véhicule circule et doit donc pouvoir être dirigé.

A l'inverse, après réalisation du réglage du parallélisme, la fonction de blocage de la direction par pilotage du moteur électrique d'assistance est désactivée sous la condition qu'une requête de désactivation de cette fonction soit faite, par une action extérieure, ou que la vitesse du véhicule soit non nulle.

En particulier, les requêtes d'activation et de désactivation de la fonction de blocage de la direction par pilotage du moteur électrique d'assistance peuvent être faites par l'intermédiaire d'une interface électronique externe, qui de préférence sert aussi à effectuer le réglage du parallélisme lui-même, cette interface étant par exemple un boîtier ou une valise de diagnostic.

Pour imposer au moteur électrique d'assistance une position fixe qui correspond à la position centrale de la direction du véhicule, le procédé de l'invention comporte avantageusement, pendant toute la phase de réglage du parallélisme, un asservissement en position du moteur électrique d'assistance, avec une consigne de position qui correspond à la position angulaire du moteur électrique d'assistance à l'instant de l'activation de la fonction de blocage de la direction, et avec une action correctrice tenant compte de la position instantanée (ou position « courante ») du moteur électrique, et tendant à maintenir le moteur électrique dans la position de consigne, par un couple moteur adapté en grandeur et en sens.

En pratique, lorsqu'un réglage du parallélisme du train avant d'un véhicule doit être effectué, l'opérateur positionne d'abord les roues directrices au point milieu, puis il envoie la requête d'activation de la fonction de blocage via l'interface électronique externe, de sorte que la direction du véhicule sera maintenue dans sa position centrale. Il est alors procédé au réglage du parallélisme proprement dit. Pendant la phase de réglage du parallélisme, le volant reste en position centrale, quel que soit le couple appliqué sur celui-ci, grâce à l'asservissement réalisé par l'intermédiaire du moteur électrique d'assistance. Enfin, lorsque le réglage du parallélisme est terminé, l'opérateur désactive la fonction de blocage de la direction.

L'invention sera mieux comprise à l'aide de la description qui suit, en référence au dessin schématique annexé représentant, à titre d'exemple, un mode de mise en oeuvre de ce procédé pour le réglage du parallélisme du train avant des véhicules automobiles.
Figure 1 représente, très schématiquement, une direction assistée électrique de véhicule automobile ainsi que le train avant du véhicule, dont le parallélisme peut être réglé avec le procédé de l'invention;
Figure 2 est un schéma de principe du procédé de l'invention ;
Figure 3 est un schéma-bloc partiel plus détaillé illustrant l'aspect « asservissement » de ce procédé.

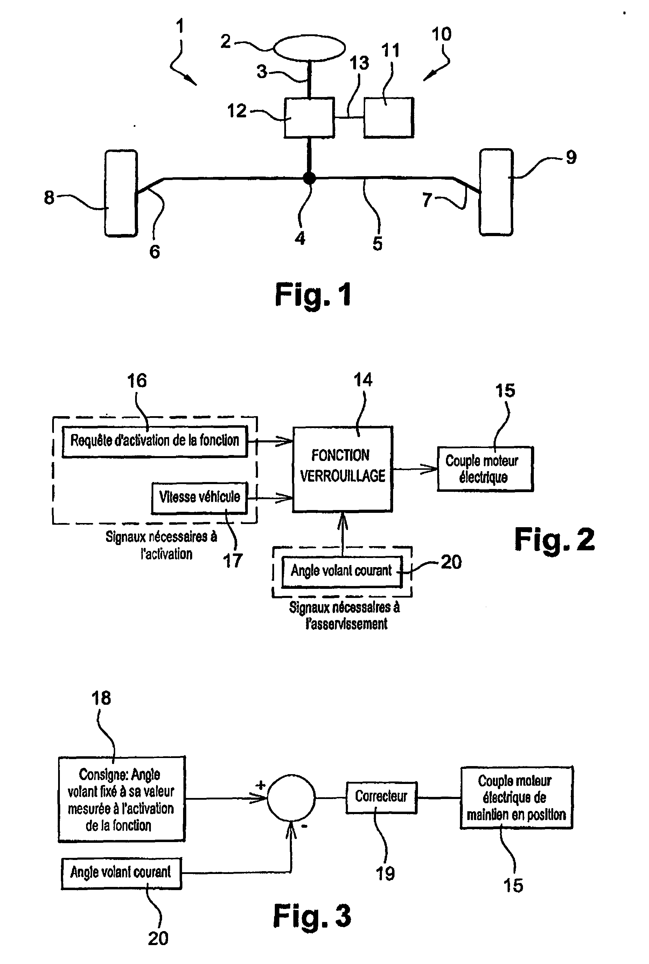

La figure 1 montre, de façon très schématique, les éléments habituels d'une direction 1 de véhicule automobile, à savoir un volant de conduite 2 lié à une extrémité d'une colonne de direction 3, dont l'autre extrémité porte un pignon de direction situé en 4, venant en prise avec une crémaillère 5. Les deux extrémités de la crémaillère 5 sont respectivement liées, par l'intermédiaire de biellettes 6 et 7, aux deux roues directrices 8 et 9 du véhicule concerné.

S'agissant ici d'une direction assistée électrique, il est prévu un ensemble motorisé 10 composé d'un moteur électrique d'assistance 11, et d'un mécanisme de transmission réducteur 12 intercalé entre le moteur électrique électrique 11 et la colonne de direction 3. Le moteur électrique d'assistance 11 est un moteur électrique à deux sens de rotation, dont l'arbre de sortie 13 est accouplé à l'entrée du mécanisme de transmission 12, par exemple du type à vis sans fin et roue tangente, qui sert de réducteur de vitesse et de multiplicateur de couple. Un couple moteur peut ainsi être transmis à la colonne de direction 3, à partir du moteur électrique 11, pour amplifier le couple exercé manuellement par le conducteur sur le volant 2, ceci lors de l'utilisation normale du véhicule.

Selon l'invention, l'assistance électrique de la direction 1, et en particulier la puissance et le couple du moteur électrique d'assistance 11, sont utilisés afin de bloquer la direction 1 et en particulier le volant 2 en position centrale, lorsqu'il est souhaité de régler le parallélisme du train avant du véhicule, c'est-à-dire le parallélisme des deux roues directrices 8 et 9.

A cet effet, comme schématisé sur la figure 2, il est prévu une fonction de verrouillage 14, qui pilote le moteur électrique d'assistance 11 en lui imposant un couple symbolisé en 15 qui maintiendra ce moteur 11 dans une position de consigne.

La fonction de verrouillage 14 est activée lors de la réunion de deux conditions, se traduisant par la présence de signaux nécessaires à l'activation, comme représenté sur la partie gauche de la figure 2 :
- Une première condition d'activation de la fonction de verrouillage 14, est la présence d'une requête d'activation de cette fonction 14, comme indiqué en 16.
- Une seconde condition d'activation de la fonction de verrouillage 14, est que la vitesse du véhicule soit nulle, comme indiqué en 17.

La première condition d'activation 16 est donnée par l'opérateur, via une interface électronique externe, qui est par exemple une valise de diagnostic. La seconde condition d'activation 17 peut être fournie automatiquement par des capteurs et/ou des moyens de calcul connus, embarqués sur le véhicule concerné.

L'asservissement en position du moteur électrique 11, donc aussi du volant 2, réalisé après activation de la fonction de verrouillage 14, est illustré schématiquement sur la figure 3 et se trouve décrit plus en détail ci-après, avec référence à cette figure 3.

Dans cet asservissement, la valeur de consigne 18 est l'angle du volant 2, fixé à sa valeur mesurée à l'instant de l'activation de la fonction de verrouillage 14. En pratique, l'opérateur ayant précédemment positionné les deux roues 8 et 9 au point milieu pour régler le parallélisme, cette valeur de consigne 18 est une valeur angulaire nulle.

Un correcteur 19 calcule l'écart entre cet angle de consigne et l'angle de volant courant 20, afin de générer la commande en couple du moteur électrique 11, fournissant le couple 15 qui maintient le moteur 11 et le volant 2 dans la position de consigne, ce couple 15 étant adapté en grandeur et en sens. La position centrale de la direction 1 est ainsi maintenue, pendant toute la durée des opérations de réglage du parallélisme qui sont elles-mêmes effectuées de manière classique, en réglant les longueurs des biellettes 6 et 7 (voir figure 1).

Ces opérations étant terminées, la fonction de verrouillage 14 est désactivée, par une requête de désactivation que l'opérateur donne via l'interface électronique externe (valise de diagnostic par exemple), ou par la détection d'une vitesse non nulle du véhicule.

On ne s'éloignerait pas du cadre de l'invention, telle que définie dans les revendications annexées :
- en prévoyant des conditions supplémentaires ou autres, pour l'activation et la désactivation de la fonction de blocage ou de verrouillage de la direction,
- en destinant le procédé à des véhicules avec directions assistées électriques de tous types, en particulier des directions dans lesquelles le moteur électrique d'assistance agit non pas sur la colonne de direction, mais sur le pignon de direction ou directement sur la crémaillère.

## Revendications

1. Procédé apportant une aide au réglage du parallélisme du train avant des véhicules automobiles équipés d'une direction (1) à assistance électrique, **caractérisé en ce qu'**il consiste, avant et pendant le réglage du parallélisme, à activer une fonction de blocage (14) de la direction (1) par un pilotage direct du moteur électrique d'assistance (11) qui amène et/ou maintient la direction (1) du véhicule dans sa position centrale.

2. Procédé selon la revendication 1, **caractérisé en ce que** la fonction de blocage (14) de la direction (1) par pilotage du moteur électrique d'assistance (11) est activée, en vue du réglage du parallélisme, sous la double condition (16, 17) qu'une requête d'activation de cette fonction (14) soit faite, par une action extérieure, et que la vitesse du véhicule soit nulle.

3. Procédé selon la revendication 2, **caractérisé en ce que**, après réalisation du réglage du parallélisme, la fonction de blocage (14) de la direction (1) par pilotage du moteur électrique d'assistance (11) est désactivée, sous la condition qu'une requête de désactivation de cette fonction (14) soit faite, par une action extérieure, et que la vitesse du véhicule soit non nulle.

4. Procédé selon l'ensemble des revendications 2 et 3 , **caractérisé en ce que** les requêtes d'activation et de désactivation de la fonction de blocage (14) de la direction (1) par pilotage du moteur électrique d'assistance (11) sont faites par l'intermédiaire d'une interface électronique externe, qui de préférence sert aussi à effectuer le réglage du parallélisme lui-même, cette interface étant par exemple un boîtier ou une valise de diagnostic.

5. Procédé selon l'une des revendications 1 à 4, **caractérisé en ce qu'**il comporte, pendant toute la phase de réglage du parallélisme, un asservissement en position du moteur électrique d'assistance (11), avec une consigne de position (18) qui correspond à la position angulaire du moteur électrique (11) à l'instant de l'activation de la fonction de blocage (14) de la direction (1), et avec une action correctrice (19) tenant compte de la position instantanée ou position courante du moteur électrique (11), et tendant à maintenir le moteur électrique (11) dans la position de consigne (18), par un couple moteur (15) adapté en grandeur et en sens.

## Claims

1. A method providing assistance with adjusting the parallelism of the front axle of motor vehicles equipped with electric power steering (1), **characterized in that** it consists, before and during the adjustment of the parallelism, of activating a function (14) for blocking the steering (1) by direct control of the assisting electric motor (11) which brings and/or maintains the steering (1) of the vehicle in its central position.

2. The method according to claim 1, **characterized in that** the function (14) for blocking the steering (1) by controlling the assisting electric motor (11) is activated with view to adjusting the parallelism, under the double condition (16, 17) that a request for activating this function (14) is made by an exterior action, and that the speed of the vehicle is zero.

3. The method according to claim 2, **characterized in that** after achieving adjustment of the parallelism, the function (14) for blocking the steering (1) by controlling the assisting electric motor (11) is deactivated, provided that a request for deactivating this function (14) is made by an exterior action, and that the speed of the vehicle is nonzero.

4. The method according to the whole of claims 2 and 3, **characterized in that** the requests for activating and deactivating the function (14) for blocking the steering (1) by controlling the assisting electric motor (11) are made via an external electronic interface, which is also preferably used for carrying out the adjustment of the actual parallelism, this interface for example being a diagnostic casing or suitcase.

5. The method according to one of claims 1 to 4, **characterized in that** it includes, during the whole phase for adjusting the parallelism, a position servo-control of the assisting electric motor (11), with a set position value (18) which corresponds to the angular position of the electric motor (11) at the instant when the function (14) for blocking the steering (1) is activated, and with corrective action (19) taking into account the instantaneous position or current position of the electric motor (11), and tending to maintain the electric motor (11) in a set position value (18) by a drive torque (15) adapted in magnitude and in direction.

## Patentansprüche

1. Verfahren zur Unterstützung der Spureinstellung der Vorderradachse von Kraftfahrzeugen mit elektrischer Servolenkung (1), **dadurch gekennzeichnet, dass** es darin besteht, vor und während der Spureinstellung eine Blockierfunktion (14) der Lenkung (1) durch eine direkte Ansteuerung des elektrischen Hilfsmotors (11) zu aktivieren, der die Lenkung (1) des Fahrzeugs in ihre mittige Stellung führt und/oder hält.

2. Verfahren nach Anspruch 1, **dadurch gekennzeichnet, dass** die Blockierfunktion (14) der Lenkung (1) durch Ansteuerung des elektrischen Hilfsmotors (11) zwecks Spureinstellung unter der doppelten Bedingung (16, 17) aktiviert wird, dass eine Aktivierungsanfrage dieser Funktion (14) durch eine äußere Aktion erfolgt und die Fahrzeuggeschwindigkeit null ist.

3. Verfahren nach Anspruch 2, **dadurch gekennzeichnet, dass** die Blockierfunktion (14) der Lenkung (1) nach Durchführung der Spureinstellung durch Ansteuerung des elektrischen Hilfsmotors (11) unter der Bedingung deaktiviert wird, dass eine Deaktivierungsanfrage dieser Funktion (14) durch eine äußere Aktion erfolgt und die Fahrzeuggeschwindigkeit null ist.

4. Verfahren nach der Gruppe der Ansprüche 2 und 3, **dadurch gekennzeichnet, dass** die Aktivierungs- und Deaktivierungsanfragen der Blockierfunktion (14) der Lenkung (1) durch Ansteuerung des elektrischen Hilfsmotors (11) über eine externe elektronische Schnittstelle erfolgen, die vorzugsweise auch zur Durchführung der Spureinstellung selbst dient, wobei diese Schnittstelle beispielsweise ein Diagnosekasten oder -koffer ist.

5. Verfahren nach einem der Ansprüche 1 bis 4, **dadurch gekennzeichnet, dass** es während der gesamten Phase der Spureinstellung eine Positionsansteuerung des elektrischen Hilfsmotors (11) mit einem Positionssollwert (18) aufweist, der der Winkelposition des Elektromotors (11) im Augenblick der Aktivierung der Blockierfunktion (14) der Lenkung (1) entspricht, und mit einer Korrekturaktion (19), bei der die momentane Position oder laufende Position des Elektromotors (11) berücksichtigt wird, und der Tendenz, den Elektromotor (11) durch ein in Größe und Richtung angepasstes Motormoment (15) in der Sollwertposition (18) zu halten.
